## Europäisches Patentamt

## European Patent Office

## Office européen des brevets

(19)

(11) Veröffentlichungsnummer: **0 040 425**
**B1**

(12) **EUROPÄISCHE PATENTSCHRIFT**

(45) Veröffentlichungstag der Patentschrift:
**12.09.84**

(21) Anmeldenummer: **81103835.5**

(22) Anmeldetag: **19.05.81**

(51) Int. Cl.³: **E 03 F 5/14,** E 02 B 8/02,
B 01 D 25/18, B 01 D 25/32

(54) **Vorrichtung zum Entfernen von Schwemmgut und Feststoffen aus Zulaufgerinnen, insbesondere von Kläranlagen.**

(30) Priorität: **20.05.80 DE 3019127**

(43) Veröffentlichungstag der Anmeldung:
**25.11.81 Patentblatt 81/47**

(45) Bekanntmachung des Hinweises auf die Patenterteilung:
**12.09.84 Patentblatt 84/37**

(84) Benannte Vertragsstaaten:
**AT BE CH FR GB IT LI NL SE**

(56) Entgegenhaltungen:
**DE - A - 2 142 540**
**FR - A - 1 372 700**
**FR - A - 2 142 295**
**US - A - 1 975 393**
**US - A - 2 910 181**
**US - A - 2 929 504**

(73) Patentinhaber: **Abel, Günther, Fischerstrasse 1,
D-7913 Senden (DE)**

(72) Erfinder: **Abel, Günther, Fischerstrasse 1,
D-7913 Senden (DE)**

(74) Vertreter: **Patentanwälte Dipl.-Ing. Rudolf Bibrach
Dipl.-Ing. Elmar Rehberg, Pütterweg 6 Postfach 738,
D-3400 Göttingen (DE)**

ACTORUM AG

## Beschreibung

Die Erfindung betrifft eine Vorrichtung gemäss den Merkmalen des Oberbegriffes des Anspruches 1. Die Vorrichtung ist insbesondere in Kläranlagen einsetzbar, kann jedoch auch in der Textilindustrie, in Schlachthöfen, Geflügelfarmen, Gerbereien usw. Verwendung finden.

Eine solche Vorrichtung ist aus der DE-A-2 142 540 oder auch der US-A-2 929 504 bekannt. Die Vorrichtung besteht im wesentlichen aus einer Schneckenfördereinrichtung mit einer über einen aufgesetzten Motor angetriebenen Schneckenwelle, die in einem Gehäuse umläuft. Das Gehäuse der Schneckenfördereinrichtung ist im unteren Bereich entsprechend dem vorgesehenen Wasserspiegel durch einen Rost, ein Sieb oder dgl. ersetzt. Die Wendel der Förderschnecke streicht bei ihrem Antrieb unmittelbar an dem Rost bzw. Sieb entlang und fördert das Rechengut je nach Grösse entweder aufwärts in der Fördereinrichtung oder durch das Sieb, den Rost oder dgl. hindurch. Das Gehäuse der Schneckenfördereinrichtung ist im wesentlichen zylindermantelförmig oder trog-förmig ausgebildet und besitzt eine Abwurfstelle für das Rechengut. Der Nachteil dieser bekannten Vorrichtungen ist darin zu sehen, dass die Fläche des Rostes bzw. Siebes, die vom Wasser bestrichen wird, relativ zum Durchmesser der Schneckenfördereinrichtung sehr klein ist, weil der Rost, das Sieb od. dgl. in der Verlängerung des Gehäuses der Schneckenfördereinrichtung etwa auf gleichem Durchmesser angeordnet ist. Dies bedeutet bei relativ breiten Zulaufgerinnen, dass die Schneckenfördreinrichtung entweder einen relativ grossen Durchmesser bekommen muss oder aber nur ein Teil des Zulaufgerinnes von Rechengut gereinigt werden kann. Darüber hinaus setzt sich eine relativ kleine Rostfläche leichter zu, so dass sie öfters gereinigt werden muss oder den kontinuierlichen Betrieb der Schneckenfördereinrichtung bedingt. Da die bekannten Schneckenfördereinrichtungen Schneckenwellen mit über deren Länge konstanter Steigung besitzen, tritt eine nennenswerte Verdichtungswirkung des Rechengutes nicht ein. Das Rechengut kommt auch nicht unter Druck, wird also nur unter Schwerkrafteinwirkung entwässert.

Die FR-A-2 142 295 zeigt eine ähnliche Vorrichtung, wobei die Schneckenfördereinrichtung mit senkrecht stehender Schneckenwelle in dem Zulaufgerinne angeordnet ist. Das Gehäuse der Schneckenfördereinrichtung ist im unteren Bereich offen gestaltet. Quer im Zulaufgerinne ist ausserdem noch ein Gitter angeordnet. Der Schneckenfördereinrichtung vorgeschaltet sind trichterartig wirkende Abweisbleche ortsfest im Zulaufgerinne angeordnet, die im übrigen noch perforiert ausgebildet sind. Bei dieser Vorrichtung wird nur ein Teil des zu reinigenden Wassers von der Schneckenfördereinrichtung erfasst.

Der Erfindung liegt die Aufgabe zugrunde, die Vorrichtung der eingangs beschriebenen Art so weiterzubilden, dass damit Rechengut unterscheidlicher Grösse aus dem gesamten Querschnitt des Zulaufgerinnes auch dann abgezogen werden kann, wenn das Gehäuse der Schneckenfördereinrichtung einen vergleichsweise kleineren Durchmesser besitzt. Das abzuscheidende Rechengut soll zusätzlich kompaktiert und dabei weiter entwässert werden.

Erfindungsgemäss wird dies durch die Merkmale des Anspruchs 1 erreicht. Die Erfindung löst sich grundsätzlich vom Stand der Technik, der eigentlich nur abgewandelte Schneckenfördereinrichtungen zeigt und schafft einen Korbrechen dessen Rost nach Art eines Zylindermantels oder auch eines Kegelstumpfmantels ausgebildet sein kann und dessen Durchmesser nicht mehr auf den Durchmesser des Gehäuses der Schneckenfördereinrichtung fixiert ist. Damit wird an der Vorrichtung das Abscheiden vom Rechengut am Rost grundsätzlich getrennt von der Fördereinrichtung. Für die Abscheidewirkung kann die Fläche des Rostes leicht vorteilhaft gross gewählt werden, während die Schneckenfördereinrichtung im Durchmesser der Schnekkenwelle und des Gehäuses völlig unabhängig von der Breite des Zulaufgerinnes gewählt werden kann, was im übrigen der Verdichtungswirkung des Rechengutes zugute kommt. Wesentlich ist ferner, dass der Rost an dem aus dem Wasserspiegel herausragenden Teil etwa über ein Viertel seines Umfanges unterbrochen ist. Diese Unterbrechungsstelle gestattet es, einen diskontinuierlichen Betrieb anzuwenden und das Rechengut bereits aus dem Wasser emporzuheben und abtropfen zu lassen, also eine gewisse Vorentwässerung durchzuführen, bevor das Rechengut in den Trichter der Schneckenfördereinrichtung eintritt. In der Schneckenfördereinrichtung wird dann gefördert und kompaktiert, wobei eine weitere Entwässerung stattfindet. Es wird also zum einen die Hebe-Förderfunktion und zum anderen die Verdichtungsfunktion erreicht. Die Förderschnecke ist entsprechend der schräggestellten Achse des zylindermantelförmigen Rostes vorgesehen und angeordnet, so dass das Rechengut aufwärts gefördert und dabei verdichtet wird. Das Rechengut wird gleichzeitig zerkleinert und zermahlen, so dass es ein geringeres Volumen einnimmt. Dabei muss der Widerstand in dem rohrförmigen Gehäuse der Schneckenfördereinrichtung nach aufwärts überwunden werden. Der Einwurftrichter dient der gezielten Aufnahme des von den Räumgliedern an dem Rost innen abgenommenen Rechengutes. Die Welle der Schneckenfördereinrichtung trägt an ihrem unteren Ende mindestens einen mit Räumgliedern für den Rost besetzten Räumarm, so dass für die Förder-Verdichtungseinrichtung und für den eigentlichen Korbrechen nur ein einziger gemeinsamer Antrieb vorgesehen sein kann.

Der Rost ist über eine Abdeckscheibe an dem Gehäuse der Schneckenfördereinrichtung aufgehängt und besteht aus einer Vielzahl von gleichabständig angeordneten Kreisringscheiben. Es versteht sich, dass der Durchmesser der Kreisringscheiben an den Querschnitt des Zulaufgerinnes angepasst werden muss. Die Dimensionierung der Kreisringscheiben ist von dem Anwendungsgebiet und der Art des Rechengutes abhängig. Es besteht die Möglichkeit, dass die den Rost bildenden Kreisringscheiben bei gleichem Aussendurchmesser unterschiedlich gestufte Innendurchmesser aufweisen und dass die Räumglieder entsprechend den Innendurchmessern gestufte Ausnehmungen besitzen. Auf diese Weise wird eine Rostfläche mit unterscheidlicher Stufung erzielt, bei der das Rechengut je nach seiner Grösse an unterschiedlichen Kreisringscheiben abgeschieden wird. Grobes Rechengut wird sich gegen die Kreisringscheiben legen die den kleinsten Innendurchmesser aufweisen, während das feine Rechengut bevorzugt an den Kreisringscheiben mit dem grössten Innendurchmesser abgeschieden wird. Damit wird ein einziges Gerät geschaffen, welches gleichzeitig Grobrechen, Mittelrechen und Feinrechen ist. Wie schon ausgeführt, wirkt die Vorrichtung zusätzlich als Zerkleinerungsmaschine, als Verdichtungs- und Entwässerungseinrichtung, wobei eine Volumenverringerung des Rechengutes um ca. 2/3 eintritt. Schliesslich dient die Vorrichtung auch als Förderanlage, um das Rechengut aus dem Zulaufgerinne herauszuheben und beispielsweise in einen Container abzuwerfen. Schliesslich ist auch der Antrieb vergleichsweise vereinfacht, weil für die Schneckenfördereinrichtung, die Räumglieder ein gemeinsamer Antrieb vorgesehen ist. Dieser kann aus einem am oberen Ende der Welle der Schneckenfördereinrichtung aufgesetzten Motor bestehen.

Das Gehäuse der Schneckenfördereinrichtung kann in einem Teilbereich oberhalb des Wasserspiegels für Entwässerungszwecke durchbrochen ausgebildet sein. Dies ist jedoch nicht in allen Fällen erforderlich, weil das Wasser auch im Innern des Gehäuses der Schneckenfördereinrichtung nach unten ablaufen kann.

Der Einwurftrichter der Schneckenfördereinrichtung weist entgegengesetzt zu der Drehrichtung der Räumglieder ein Abdeckblech auf und ist auf die Anordnung und Ausbildung der Räumglieder abgestimmt, so dass damit ein Rückfall des Rechengutes von einem Räumglied in das Zulaufgerinne verhindert wird.

Im Bereich der Durchbrechungsstelle des Rostes und des Einwurftrichters kann ein beweglich aufgehängter Abstreifer vorgesehen sein, der an den Räumgliedern anhaftendes Rechengut von diesen löst und in den Einwurftrichter der Schneckenfördereinrichtung abwirft.

Die beschriebene Vorrichtung gestattet auch eine vorteilhafte Betriebsweise. Wenn beispielsweise zwei Räumglieder jeweils an den Enden eines durchgehenden Räumerarmes vorgesehen sind, die also um 180° gegeneinander versetzt sind, dann wird der Antrieb der Vorrichtung diskontinuierlich immer nur um 180° bewirkt, worauf dann ein Stillstand der angetriebenen Teile eintritt. Als Stillstandsstellung wird eine solche Stellung gewählt, bei der das eine, mit Rechengut besetzte Räumglied ausserhalb des Wasserspiegels und noch vor Erreichen der Stelle des Einwurftrichters angehalten wird, damit zunächst einmal anhaftendes Wasser von dem Rechengut ablaufen und abtropfen kann. Der Antrieb für die Fördereinrichtung und den Räumarm wird erst dann wieder in Tätigkeit gesetzt, wenn der Wasserspiegel auf einen einstellbaren Wert angestiegen ist, sich also eine gewisse Stauwirkung des sich zusetzenden Rechenrostes bemerkbar macht. Auf diese Weise wird die eingesetzte Antriebsenergie sparsam verwendet und dem Rechengutanfall automatisch angepasst. Das Rechengut wird nach dem Einwurf in den Einwurftrichter von der Förderschnecke der Schneckenfördereinrichtung erfasst und in deren Gehäuse aufwärts gefördert, wobei eine Verdichtungswirkung eintritt. Die Schneckenwendel der Förderschnecke kann in besonderer Weise und unter Verwendung örtlich unterschiedlicher Steigungen ausgebildet sein, um besondere Förder- und Entwässerungseffekte zu erzielen. Da die Förderschnecke gegen den Widerstand des Rechenguts, welches sich verdichtend in dem aufwärts geführten rohrförmigen Gehäuse der Fördereinrichtung sammelt, gefördert werden muss, tritt eine beachtliche Volumenverringerung des Rechengutes verbunden mit entsprechender Entwässerung ein.

Ein Ausführungsbeispiel der Erfindung ist in der Zeichnung dargestellt und wird im folgenden näher beschrieben. Es zeigen:

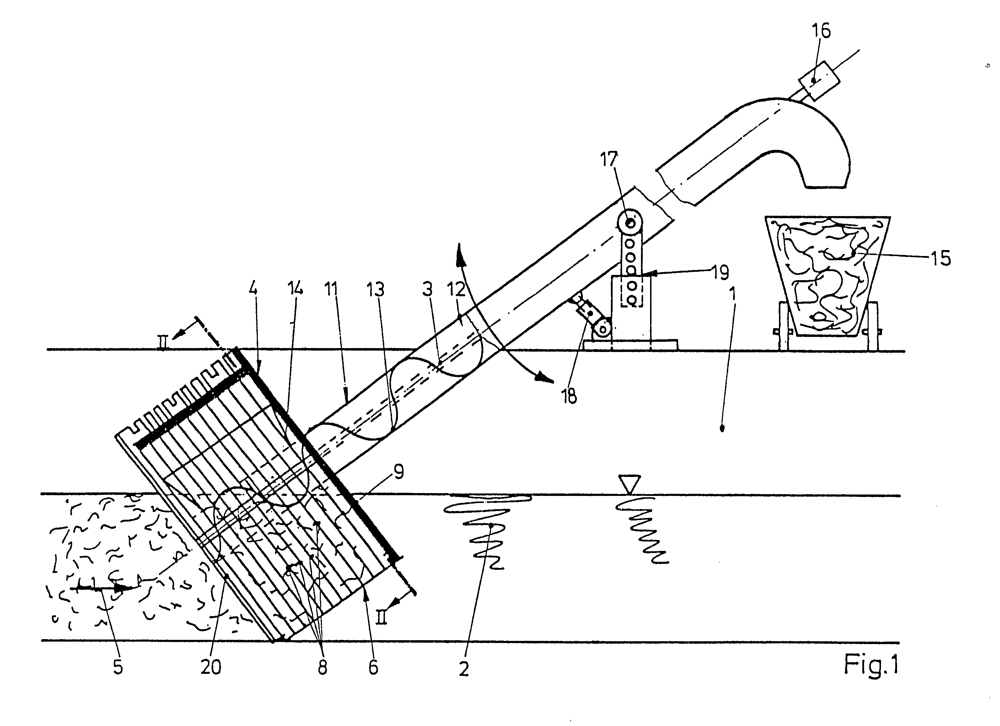

Fig. 1 eine schematisierte Seitenansicht der Vorrichtung,
Fig. 2 einen Schnitt gemäss der Linie II-II in Fig. 1 und
Fig. 3 einen Schnitt durch die Vorrichtung nach den Fig. 1 und 2 gemäss der Linie III-III in Fig. 2.

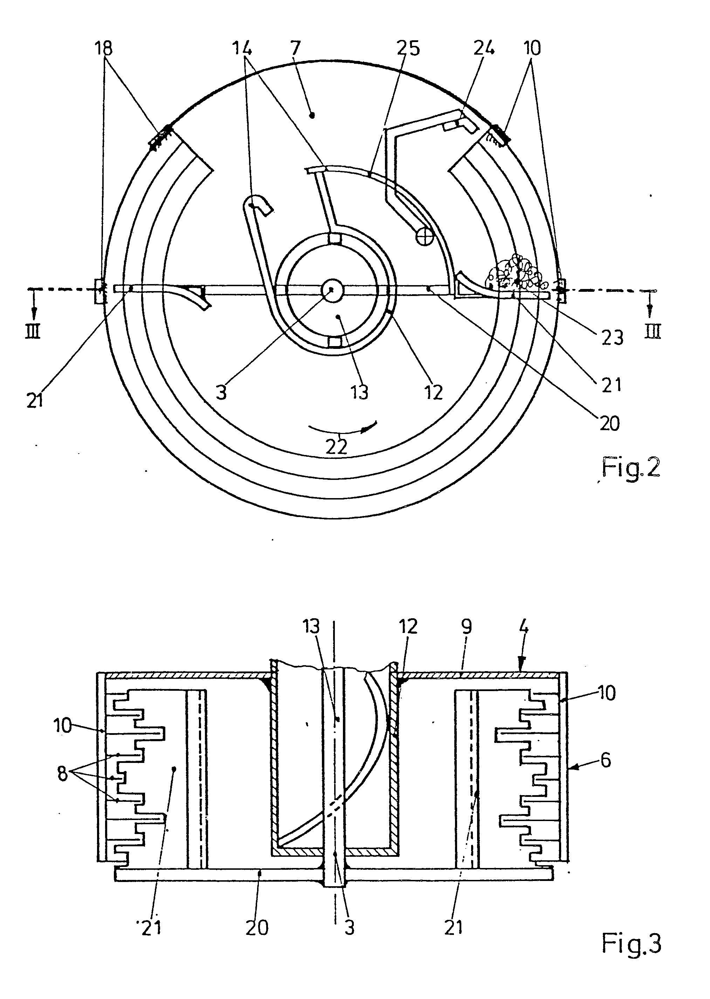

In dem Zulaufgerinne 1, dessen Wasserspiegel 2 in bestimmten Grenzen schwanken kann, ist die Vorrichtung mit schräg angeordneter Achse 2 eingeschwenkt, so dass deren Korbrechen 4 in der dargestellten Weise von dem mit Rechengut beladenen Wasser gemäss Pfeil 5 durchströmt wird. Der Korbrechen 4 besitzt einen Rost 6, der zylindermantelförmig oder kegelstumpfförmig ausgebildet und angeordnet ist und der, wie aus Fig. 2 ersichtlich, etwa über 270° durchgehend vorgesehen ist, so dass er auf einem Viertel seines Umfanges unterbrochen ist. Diese Unterbrechungsstelle 7 ist oben, also ausserhalb des Wasserspiegels 2 angeordnet und dient dem Abwurf des Rechengutes, wie noch später erläutert wird. Der Rost 6 besteht aus einzelnen Kreisringscheiben 8 und einer Abdeckscheibe 9, die ortsfest angeordnet sind; parallel zur Achse 3 sind aussen an den Kreisringscheiben 8 Halteleisten 10 vorgesehen, die mit der Abdeckscheibe 9 in Verbindung stehen und an denen die Kreisringscheiben 8 angeschweisst sind.

Um die Achse 3 herum, also zentral in dem Rechenkorb 4 und nach oben aufwärts geneigt ist eine Schneckenfördereinrichtung 11 mit ihrem Gehäuse 12 und der Schneckenwelle 13 angeordnet. Die Wendel der Schneckenwelle 13 kann über ihre axiale Erstreckung unterschiedliche Steigung aufweisen. Das Gehäuse 12 ist im Bereich des Rechenkorbes 4 oben mit einem Einwurftrichter 14 versehen, durch den das Rechengut in die Schneckenfördereinrichtung 11 gelangt. Am oberen Ende kann das Gehäuse 12 der Schneckenfördereinrichtung gebogen ausgebildet sein, um das Rechengut in verdichtetem Zustand in einen Container, einen Transportwagen oder dgl. 15 abzuwerfen. Zwecks gemeinsamen Antriebes der Schneckenfördereinrichtung 11 und entsprechender Teile des Rechens ist ein Motor 16 auf das obere Ende der Schneckenwelle 13 aufgesetzt, die aus dem Gehäuse 12 herausgeführt ist. Auch andere Realisierungsmöglichkeiten des Antriebes sind denkbar.

Die gesamte Einrichtung ist schrägstehend eintauchend in den Wasserspiegel 2 angeordnet, wobei ein Ausschwenken um ein Querlager 17 mit Hilfe einer Hubeinrichtung 18 möglich ist, so dass der Rechenkorb 4 und die Schneckenfördereinrichtung 11 zu Wartungs- oder Reparaturzwecken aus dem Gerinne 1 freikommt und gut zugänglich ist. Um den Neigungswinkel der Achse 3 zu verstellen und an den Wasserspiegel 2 anzupassen, kann eine Hebe- und Verstelleinrichtung 19 vorgesehen sein.

Die Schneckenwelle 13 trägt an ihrem unteren Ende, an dem sie aus dem Gehäuse 12 herausgeführt ist, vorzugsweise nur einen Räumarm 20, der drehfest mit ihr verbunden ist. An den beiden Enden des Räumarmes 20 sitzt je ein Räumglied 21 (Fig. 3), welches der inneren Oberfläche der Kreisringscheibe 8 bzw. des Rostes 6 zugekehrt angeordnet ist. Wie Fig. 3 zeigt, können die Kreisringscheiben 8 gleichen Aussendurchmesser, aber verschiedene Innendurchmesser aufweisen, so dass bei gleichbeständiger Anordnung in axialer Richtung die Kreisringscheiben nach innen verschieden weit vorstehen. Zwischen zugehörigen Kreisringscheiben wird dann jeweils eine Abscheidewirkung des Rechengutes erzielt, die mit Rosten unterschiedlicher Durchlässigkeit vergleichbar ist. Grobes Rechengut wird vorzugsweise an den Kreisringscheiben 8 mit dem kleinsten Innendurchmesser hängenbleiben, während das feine Rechengut durch die Bewegung des Wassers weiter mitgetragen wird und an den Kreisringscheiben mit relativ grossem Innendurchmesser abgeschieden wird. Der Räumarm 20, die Schneckenwelle 13 und die Räumglieder 21 werden in der durch Pfeil 22 in Fig. 2 dargestellten Drehrichtung relativ gegenüber dem Rechenkorb 4 angetrieben. Die Räumglieder 21 streichen dabei innen an den Kreisringscheiben 8 des Rostes 6 entlang und nehmen das Rechengut 23 von diesen ab. Der Antrieb erfolgt diskontinuierlich und zwar vorzugsweise immer um 180°. Das eine Räumglied 21, welches somit bei einer Bewegung den wesentlichen Teil des Rostes 6 überstreift und dabei Rechengut 23 aufgenommen hat, taucht am Ende des Bewegungszyklusses aus dem Wasserspiegel 2 heraus und bleibt im Bereich der Unterbrechungsstelle 7 stehen, so dass anhaftendes Wasser von dem Rechengut 23 abtropfen und ablaufen kann. Im Bereich der Unterbrechungsstelle 7 ist ein Abstreifer 24 beweglich aufgehängt, der mit den Räumgliedern 21 zusammenarbeitet. Bei einem neuen Antriebstakt streift der Abstreifer 24 das Rechengut 23 von dem Räumglied 21 ab, und zwar derart, dass es in den Einwurftrichter 14 der Schneckenfördereinrichtung 11 fällt. Der Einwurftrichter 14 besitzt entgegengesetzt der Drehrichtung 22 ein Abdeckteil 25, welches verhindert, dass Rechengut 23 von dem Räumglied 21 abfällt und in das Wasser zurückfällt. Das Abdeckteil 25 ergänzt in diesem Bereich, in welchem auch der Abstreifer 24 schon wirksam sein kann, die Fördereinrichtung, die durch die Räumglieder 21 gebildet wird.

**Patentansprüche**

1. Vorrichtung zum Entfernen von Schwemmgut und Feststoffen aus Zulaufgerinnen (1), insbesondere von Kläranalgen, mit einem bis zur Sohle des Zulaufgerinnes reichenden flüssigkeitsdurchlässigen und im wesentlichen zylindermantelförmig ausgebildeten Rost (6), der in eine schräg aufwärts gerichtete, zur Abwurfstelle führende und als Schneckenfördereinrichtung (11) mit Gehäuse (12) und Schneckenwelle (13) ausgebildete Förderstrecke für das Rechengut übergeht, dadurch gekennzeichnet, dass der Rost (6) einen vergleichsweise grösseren Durchmesser als das Gehäuse (12) der Schneckenfördereinrichtung (11) aufweist und an dem aus dem Wasserspiegel herausragenden Teil etwa über ein Viertel seines Umfanges unterbrochen ist, dass die Schneckenfördereinrichtung (11) mit einem der Unterbrechungsstelle (7) des Rostes (6) zugeordneten Einwurftrichter (14) für das Rechengut (22) versehen ist, und dass die Welle der Schneckenfördereinrichtung (11) an ihrem unteren Ende mindestens einen mit Räumgliedern (21) für den Rost (6) besetzten Räumarm (20) trägt.

2. Vorrichtung nach Anspruch 1, dadurch gekennzeichnet, dass der Rost (6) über eine Abdeckscheibe (9) an dem Gehäuse (12) der Schneckenfördereinrichtung (11) aufgehängt ist und aus einer Vielzahl von gleichabständig angeordneten Kreisringscheiben (8) besteht.

3. Vorrichtung nach Anspruch 2, dadurch gekennzeichnet, dass die den Rost (6) bildenden Kreisringhälften (8) bei gleichem Aussendurchmesser unterschiedlich gestufte Innendurchmesser aufweisen und dass die Räumglieder (21) entsprechend den Innendurchmessern Ausnehmungen besitzen.

4. Vorrichtung nach einem der Ansprüche 1 bis 3, dadurch gekennzeichnet, dass für die Schneckenfördereinrichtung (11) und die Räumglieder (21) ein gemeinsamer Antrieb vorgesehen ist.

5. Vorrichtung nach Anspruch 1 oder 2, dadurch gekennzeichnet, dass das Gehäuse (12) der Schneckenfördereinrichtung (11) in einem Teilbereich oberhalb des Wasserspeigels (2) für Entwässerungszwecke durchbrochen ausgebildet ist.

6. Vorrichtung nach Anspruch 1, dadurch gekennzeichnet, dass der Einwurftrichter (14) der Schneckenfördereinrichtung (11) entgegengesetzt zu der Drehrichtung der Räumglieder (21) ein Abdeckblech (25) aufweist.

7. Vorrichtung nach Anspruch 1 bis 6, dadurch gekennzeichnet, dass im Bereich der Durchbrechungsstelle (7) des Rostes (6) und des Einwurftrichters (14) ein beweglich aufgehängter Abstreifer (24) vorgesehen ist.

## Claims

1. Device for removing flushed material and solids from feeder flumes (1), in particular of effluent treatment plants, with a grate (6) which extends down to the bottom of the feeder flume, is liquid-permeable and substantially has the shape of a cylindrical shell and which merges into a conveying section for the rakings, which section is directed obliquely upwards, leads to the dumping point and is constructed as a screw conveyor unit (11) with a casing (12) and a screw shaft (13), characterised in that the grate (6) has a comparatively greater diameter than the casing (12) of the screw conveyor unit (11) and the part protruding above the water level is interrupted for about one quarter of its circumference, that the screw conveyor unit (11) is provided with a drop-in funnel (14), associated with the interrupted part (7) of the grate (6), for the rakings (22), and that the shaft of the screw conveyor unit (11) carries on its lower end at least one scraper arm (20) fitted with scraping members (21) for the grate (6).

2. Device according to Claim 1, characterised in that the grate (6) is suspended by means of a cover plate (9) on the casing (12) of the screw conveyor unit (11) and consists of a multiplicity of circular ring plates (8) arranged at equal spacings.

3. Device according to Claim 2, characterised in that the circular ring halves (8) forming the grate (6) have, at the same external diameter, different stepped internal diameters, and that the scraping members (21) have stepped recesses corresponding to the internal diameters.

4. Device according to one of Claims 1 to 3, characterised in that a common drive is provided for the screw conveyor unit (11) and the scraping members (21).

5. Device according to Claim 1 or 2, characterised in that the casing (12) of the screw conveyor unit (11) is made with perforations in a part region above the water level (2), for dewatering purposes.

6. Device according to Claim 1, characterised in that the drop-in funnel (14) of the screw conveyor unit (11) has a cover sheet (25) in an arrangement opposite to the direction of rotation of the scraping members (21).

7. Device according to Claim 1 to 6, characterised in that a movably suspended skimmer (24) is provided in the region of the perforated part (7) of the grate (6) and the drop-in funnel (14).

## Revendications

1. Dispositif pour l'élimination de matières flottantes et de corps solides provenant de conduits d'amenée (1), en particulier d'installations de décantation, comprenant une grille (6), perméable aux liquides. arrivant jusqu'à la base du conduit d'amenée et de forme essentiellement cylindrique, cette grille se convertissant en une voie de transport des matières accumulées, laquelle est orientée vers le haut, conduit vers le point d'éjection, et est conformée en un dispositif de transport à vis sans fin (11) avec carter (12) et arbre hélicoïdal (13), caractérisé par le fait que la grille (6) présente un diamètre comparativement plus grand que celui du carter (12) du dispositif de transport à vis sans fin (11) et par le fait que la partie émergeant du niveau d'eau est interrompue sur environ un quart de son périmètre, par le fait que le dispositif de transport à vis sans fin (1) est muni d'une trémie-réceptacle (14) destinée aux matières (23) et coordonnée à l'endroit d'interruption (7) de la grille (6) et par le fait que l'arbre du dispositif de transport à vis sans fin (11) porte sur son extrémité inférieure au moins un bras de râclage (20) muni de râcleurs (21) pour la grille (6).

2. Dispositif selon la revendication 1, caractérisé par le fait que la grille (6) est suspendue au-dessus d'un disque de recouvrement (9) sur le carter (12) du dispositif de transport à vis sans fin (11) et par le fait qu'elle est constitué par une multitude de disques annulaires (8) équidistants entre eux.

3. Dispositif selon la revendication 2, caractérisé par le fait que les disques annulaires (8) formant la grille (6), à diamètre extérieur égal, présentent des diamètres intérieurs différenciés et par le fait que les râcleurs (21) possèdent des évidements qui correspondent aux différents diamètres intérieurs.

4. Dispositif selon l'une quelconque des revendictions 1 à 3, caractérisé par le fait qu'un entraînement commun est prévu pour le dispositif de transport à vis sans fin (11) et les râcleurs (21).

5. Dispositif selon l'une des revendications 1 ou 2, caractrisé par le fait que le carter (12) du dispositif de transport à vis sans fin (11) est interrompu dans une partie située au-dessus du niveau d'eau, à des fins de déshydratation.

6. Dispositif selon la revendication 1, caractérisé par le fait que la trémie-réceptacle (14) du dispostif de transport à vis sans fin (11) présente une tôle de recouvrement (25) placée en position opposée au sens de rotation des râcleurs (21).

7. Dispositif selon l'une quelconque des revendications 1 à 6, caractérisé par le fait que dans la zone du point d'interruption (7) de la grille (6) et de la trémie-réceptacle (14) est prévu un grattoir (24) suspendu de manière mobile.

Fig.1

Fig.2

Fig.3